# EUROPÄISCHE PATENTANMELDUNG

(11) **EP 3 865 247 A1**
(43) Veröffentlichungstag der Anmeldung: **18.08.2021**
(21) Anmeldenummer: 20157403.5
(22) Anmeldetag: 14.02.2020
(51) Int. Cl.: B23Q 3/155

(54) **EINSPANNVORRICHTUNG FÜR EIN WERKZEUG AN EINER WERKZEUGMASCHINE**

(71) Anmelder: Ivoclar Vivadent AG, 9494 Schaan (LI)
(72) Erfinder: LICHTENSTEIGER, Markus, 9462 Montlingen (CH); BOGDAN, Vadim, 75175 Pforzheim (DE)
(74) Vertreter: Baronetzky, Klaus

(57) **Zusammenfassung**

Die Erfindung betrifft eine Einspannvorrichtung (10) für ein Werkzeug (18) an einer Werkzeugmaschine mit einem Halterblock (12) die mit mindestens 2, inbesondere einer Vielzahl von, Ausnehmungen (16) für die Aufnahme von Spannhülsen (14), wobei mindestens 2 Spannhülsen (14) in den Ausnehmungen (16) aufgenommen sind. Jede Spannhülse (12) weist ein Spannelement (36) auf, mit welchem ein Werkzeug (18), insbesondere ein Schaft (20) eines Werkzeugs (18), einspannbar ist. Die Spannhülse (14) weist je die Ausnehmung (16) im dem Halterblock (12) mindestens teilweise durchtritt und an ihrem dem Spannelement (36) gegenüberliegenden Ende, dem hinteren Ende, ein Spreizelement (34) auf, das den Halterblock. (12) oder ein Gegenstützelement(30) des Halterblocks (12) hintergreift.

## Beschreibung

Die Erfindung betrifft eine Einspannvorrichtung für ein Werkzeug an einer Werkzeugmaschine, gemäß dem Oberbegriff von Anspruch 1, eine Werkzeugmaschine gemäß dem Oberbegriff von Anspruch 13 sowie eine Spannhülse gemäß dem Oberbegriff von Anspruch 14.

Werkzeugmaschinen wie Dentalfräsmaschinen benötigen häufig mehrere unterschiedliche Werkzeuge, um unterschiedlichen Anforderungen an die spanabhebende Bearbeitung gerecht zu werden.

So lassen sich in einer Dentalfräsmaschine auch andere Werkzeuge als Fräswerkzeuge einsetzen, beispielsweise Bohrwerkzeuge oder Drehschleifwerkzeuge. Zudem sind häufig unterschiedliche Durchmesser und Formen der Werkzeuge wünschenswert, sowie auch unterschiedliche Größen.

Insgesamt besteht zum Beispiel Bedarf für die Bereitstellung von 12 bis 30 Werkzeugen.

Ein Werkzeugwechsel kann grundsätzlich auch manuell vorgenommen werden, jedoch ist es wünschenswert, denn Werkzeugwechsel automatisch vorzunehmen. Hierzu ist es bekannt geworden, zahlreiche Werkzeuge unterschiedlicher Provenienz in einer so genannten Werkzeugbank bereitzustellen. Die Werkzeugbank weist dann einen Halterblock auf, der eine Vielzahl von Ausnehmungen hat, in denen die Werkzeuge gelagert sind.

Für den Werkzeugwechsel erfolgt dann eine Relativbewegung zwischen der Werkzeugbank mit dem Halterblock einerseits und dem Werkzeug und mindestens einer leeren Ausnehmung, und dem eingespannten Werkzeug andererseits, und es erfolgt eine Übergabe des aktuell verwendeten Werkzeugs der Werkzeugmaschine in eine leere Ausnehmung in dem Halterblock, und dann die Neubestückung mit einem der anderen Werkzeuge des Halterblocks, der als nächsten Werkzeug eingesetzt werden soll.

Der Werkzeugwechsel erfolgt bevorzugt typischerweise ebenfalls automatisch. Hierzu sind die Werkzeuge in dem Halterblock aufgenommen, aber mit ihren Schäften im freien Zugriff, also aus dem Halterblock herausragend. Typischerweise sind Spannhülsen vorgesehen, in die die Werkzeuge eingesteckt sind, wobei der Schaft des Werkzeugs aus der Spannhülse herausragt.

Jede Spannhülse ist dann in einer Ausnehmung aufgenommen und hält das Werkzeug per Reibschluss, aber so, dass der Schaft des Werkzeugs im freien Zugriff ist. Nachdem Werkzeuge nicht nur einen unterschiedlichen Durchmesser und eine unterschiedliche Form, sondern auch eine unterschiedliche Länge haben können, sind die Spannhülsen und auch die Ausnehmungen als Durchtrittsausnehmungen ausgebildet, erstrecken sich also durch den Halterblock hindurch. Auch die Spannhülsen weisen eine Durchtrittsausnehmung auf, so dass die Werkzeuge auch auf ihre Arbeitsseite aus der Spannhülse herausragen können.

Für den Werkzeugwechsel ist es bevorzugt, dass die Werkzeugspindel den Schaft des Werkzeugs mit ihrem Spannfutter automatisch greifen und gegen den Reibwiderstand der Spannhülse aus dieser herausziehen bzw. in diese hineinstecken kann.

Aus der EP 552 922 A1 ist eine Einspannvorrichtung für ein Werkzeug an einer Werkzeugmaschine bekannt, bei der ein Halterblock vorgesehen ist, der nach der Art einer Werkzeugbank eine Vielzahl von Werkzeugen aufnehmen kann. Hierzu weist der Halterblock eine Vielzahl von Ausnehmungen auf, die mit einer Art Einspannhülse versehen sind, in denen die Werkzeuge an einem Bereich etwas größeren Durchmessers federnd gehalten sind.

Derartige Werkzeugbänke mit Halterblöcken sind auch bei Dentalwerkzeugmaschinen bekannt geworden, wozu beispielhaft auf die DE 20 2015 100 312 U1 zu verweisen ist.

Die Übergabe der Werkzeuge zur Werkzeugbank und auch die Entnahme aus diesen ist nicht ganz trivial. Zum einen ist es nötig, exakte Positionen der Schäfte der Werkzeuge an dem Halterblock vorzusehen, beispielsweise mit einer Genauigkeit von 0,1 bis 0,2 mm. Dies deshalb, da das Spannfutter der Werkzeugmaschine den Schaft exakt greifen muss, um die erforderliche unwuchtfreie Einspannung zu ermöglichen.

Dies bedingt eine einerseits feste und andererseits etwas nachgiebige Lagerung der Werkzeuge am Halterblock, so dass es vorgeschlagen worden ist, für die Spannhülsen hochwertige Metalle wie Beryllium-Kupfer zu verwenden. Dieses Material ist jedoch zwar mechanisch gut geeignet, jedoch leider nicht korrosionsfrei; durch das Entstehen von Grünspan wird die Lagerung weniger präzise.

Die Werkzeugbank mit dem Halterblock und den Werkzeugen, mit denen die Ausnehmungen und Spannhülsen gegebenenfalls bestückt sind, ist häufig beweglich, zum Beispiel zusammen mit dem Werkstückarm der Werkzeugmaschine. Die auftretenden Beschleunigungen erfordern es, die Haltekraft der Spannhülsen hoch zu halten.

Aufgrund der erforderlichen Sicherheitsreserve kann als Auszugskraft beispielsweise eine Kraft von 50 N angesetzt werden. Ein besonderer Vorteil von Beryllium-Kupfer ist an sich die Formhaltigkeit und Langlebigkeit, so und, dass die Federeigenschaften dieses Materials also auch bei häufigen Lastwechseln, wie sie beim häufigen Werkzeugwechsel an der Spannhülse entstehen, stabil sind.

Aufgrund dieser Vorteile ist es vorgeschlagen worden, nach wie vor mit Beryllium-Kupfer-Spannhülsen zu arbeiten und diese austauschbar, beispielsweise über Seegerringe, an dem Halterblock zu fixieren.

Demgegenüber liegt der Erfindung die Aufgabe zu Grunde, eine Einspannvorrichtung für ein Werkzeug an einer Werkzeugmaschine, eine Werkzeugmaschine sowie eine Spannhülse für die Aufnahme in einer Einspannvorrichtung, gemäß dem Oberbegriff der Ansprüche 1, 13 und 14 zu schaffen, die eine mindestens gleich gute Dauerhaltbarkeit aufweist, vergleichsweise kostengünstig ist und einen sicheren Betrieb der Werkzeugmaschine ermöglicht.

Diese Aufgabe wird erfindungsgemäß durch Anspruch 1, 13 bis 14 gelöst. Vorteilhafte Weiterbildungen ergeben sich aus den Unteransprüchen.

Erfindungsgemäß ist es vorgesehen, die Spannhülse in besonderer Weise auszugestalten: die erfindungsgemäße Spannhülse hintergreift den Halterblock oder ein Gegenstützelement in der Ausnehmung des Halterblocks und weist dort ein. spezielles Spreizelement auf, das das Hintergreifen sicherstellt. Das Spreizelement ist selbstausfedernd, also elastisch und spreizt sich auf, sobald es das Gegenstützelement oder den Halterblock durchtreten hat.

Es weist bevorzugt rastende Anlageschultern auf, und Schlitze, die Zungen des Spreizelements voneinander trennen. Jede Zunge federt nach radial auswärts und ist insofern in sich elastisch. Diese federnde Realisierung ermöglicht es, auch bei hohen Wechsellasten eine Langlebigkeit der Spannhülse sicherzustellen.

Um die Langlebigkeit der Spannhülse weiter zu erhöhen, weist das Spannelement für die Aufnahme des Werkzeugs in an sich bekannter Weise radial einwärts federnde Spannelemente auf. Diese haben in bevorzugter Ausgestaltung der Erfindung einen einwärts weisenden Vorsprung. Dieser Vorsprung ist dem Werkzeug radial einwärts zugewandt und liegt ist eingespanntem Zustand bevorzugt an einem Haltering des Werkzeugs an.

Der Haltering ist in an sich bekannter Weise auf das Werkzeugs aufgepresst bzw. aufgeschrumpft und besteht typischerweise auf Messing, wenn das Werkzeug aus Stahl besteht. Der Vorsprung setzt außen auf dem Haltering auf und fixiert diesen zusammen mit der engen Führung des Werkzeugs innen in der Einspannhülse an der gewünschten Stelle.

Die Entnahme des Werkzeugs aus der Einspannhülse ist ohne weiteres möglich, unter Überwindung der Reibkraft des Vorsprungs an dem Haltering des Werkzeugs.

Erfindungsgemäß besonders günstig ist es, dass ein Spreizelement an dem hinteren Ende der Spannhülse ausgebildet ist. Das Ende der Spannhülse, an der das Spreizelement ausgebildet ist, wird als hinteres Ende bezeichnet, und das Ende, an der das werkzeugaufnehmende Spannelement angeordnet ist, wird als vorderes Ende bezeichnet.

Das erfindungsgemäße Spreizelement weist nach außen weisende Anlageschultern auf. Diese hintergreifen mindestens einen Teil des Werkzeugblocks. Dieser Teil kann das hintere Ende der Ausnehmung sein, oder beispielsweise des Gegenstützelements, der in der Ausnehmung radial einwärts vorspringend ausgebildet ist, oder eine beliebige Hinterschneidung an dieser Stelle.

Die Realisierung des Spreizelements erlaubt es, dass die Spannhülse kurzerhand von dem vorderen Ende der Ausnehmung, also dem Ende, das dem Spannelement benachbart ist, in die Ausnehmung einzuführen. Das Spreizelement funktioniert so, dass über eine Einführschräge das Spreizelement radial einwärts gedrückt wird, sobald es das Gegenstützelement passiert. Sobald die Anlageschulter das Gegenstützelement passiert hat, schnappt das Spreizelement durch die radial auswärts weisende Spreizkraft nach außen und rastet im Grunde an dem Gegenstützelement ein.

Durch ein Einwärtsschieben des Spreizelements lässt sich die Spannhülse ohne weiteres wieder entnehmen, was beispielsweise kurzerhand mittels eines Schraubenziehers möglich ist. Die Anlageschulter bietet zugleich eine sichere und definierte Positionierung der Spannhülse in dem Werkzeugblock. Dies kommt der Einführsicherheit des Werkzeugs in die Spannhülse zugute.

In vorteilhafter Ausgestaltung ist eine Druckfeder ausgebildet, die sich zwischen einem Anschlagring der Spannhülse am vorderen Ende der Ausnehmung und dem vorderen Ende das Gegenstützelement erstreckt. Die Druckfeder drückt die Anlageschulter des Spreizelements gegen das Gegenstützelement und erlaubt insofern axial eine genau definierte Position der Spannhülse.

Die Spannhülse kann aus einem beliebigen geeigneten Material bestehen, beispielsweise aus PPA. Damit ist es erfindungsgemäß nicht länger notwendig, teure Materialien wie Beryllium-Kupfer einzusetzen. Dennoch ist die Positioniergenauigkeit mindestens gleich gut, und ebenso die Verschleißfestigkeit.

Das Spannelement kann aus einer Mehrzahl von radial einwärts wirkenden Spannzungen gebildet sein, mit welchen das Werkzeug einspannbar ist. Beispielsweise können vier Spannzungen gleichmäßig um den Umfang des Werkzeugs verteilt dieses einspannen.

Auch das Spreizelement kann aus mehreren Zungen bestehen, den Spreizzungen. Auch hier können beispielsweise vier Spreizzungen in an sich bekannter Weise ringförmig verteilt sein, wobei zwischen den Spreizzungen geeignete Schlitze ausgebildet sind, um eine unabhängige Betätigung zu ermöglichen.

Das Spannelement übt, wenn das Werkzeug dort gehalten ist, eine Spannkraft radial einwärts aus, und das Spreizelement in montiertem Zustand der Spannhülse wirkt mit seiner Spannkraft radial nach auswärts.

Erfindungsgemäß ist es auch möglich, bei bislang verwendeten Einspannblöcken, die verschlissenen Spannhülsen aus Beryllium-Kupfer durch erfindungsgemäß realisierte, beispielsweise aus PPA, zu ersetzen. Es ist aber auch möglich, eine neue Werkzeugmaschine gleich mit einer entsprechend erforderlichen Anzahl von erfindungsgemäßen Spannhülsen in dem Werkzeugblock zu realisieren.

Der Anschlagring, an dem die Druckfeder abgestützt ist, dient zugleich der Führung der Spannhülse am vorderen Ende der Ausnehmung. Die Spannhülse ist in der Ausnehmung also in ihrem rückwärtigem Ende an das Gegenstützelement geführt, und, wie ausgeführt, an ihrem vorderen Ende an dem Anschlagring.

Das Vorsprungmaß des Gegenstützrings in der Ausnehmung des Werkzeugblocks und das Vorsprungmaß des Anschlagrings radial nach auswärts gegenüber der Einspannhülse im Übrigen kann gleich groß sein, oder sich voneinander um zum Beispiel 20% unterscheiden. Der Raum zwischen diesen Ringen ist bevorzugt von der Druckfeder eingenommen.

Weitere Einzelheiten, Vorteile und Merkmale der Erfindung sind aus der nachfolgenden Beschreibung mehrerer Ausführungsbeispiele anhand der Zeichnung ersichtlich.

Es zeigen:
- Fig. 1: eine perspektivische Ansicht eines erfindungsgemäßen Halterblocks unter Darstellung der erfindungsgemäßen Einspannvorrichtung und von mehreren Werkzeugen;
- Fig. 2: eine weitere Ansicht des Halterblocks, bestückt mit Spannhülsen und Werkzeugen;
- Fig. 3: eine weitere Ansicht der Ausführungsform gemäß den Fig. 1 und 2;
- Fig. 4: eine perspektivische Ansicht einer Spannhülse, einer Druckfeder und eines schematisch dargestellten Werkzeugs;
- Fig. 5: eine perspektivische Ansicht einer Ausführungsform einer Spannhülse;
- Fig. 6: eine weitere perspektivische Darstellung einer Ausführungsform der Spannhülse; und
- Fig. 7: eine schematische Schnittdarstellung der Spannhülse in montiertem Zustand in dem Werkzeugblock.

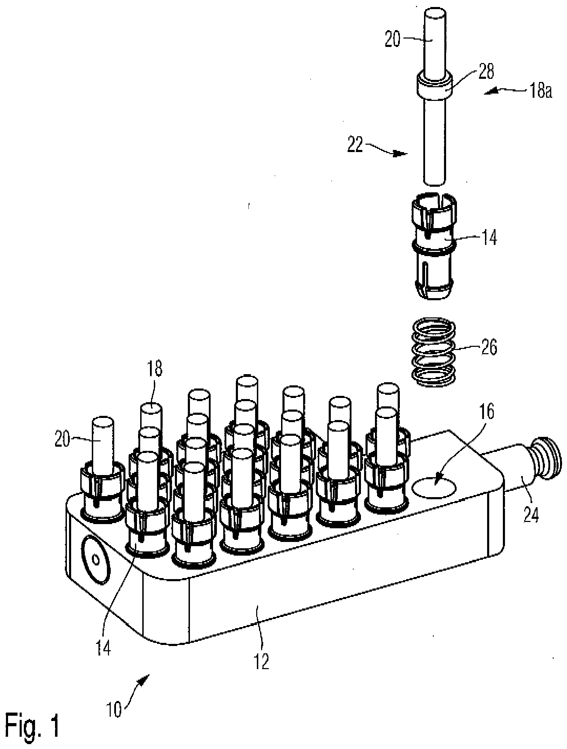

Aus Fig. 1 ist ein Einspannelement 10 ersichtlich, zu dem ein Halterblock 12 gehört, der eine Vielzahl von Spannhülsen 14 in einer ebenfalls vorgesehenen Vielzahl von Ausnehmungen 16 aufnimmt.

Die Spannhülsen 14 gemäß Fig. 1 sind je mit Werkzeugen 18 bestückt.

Wie aus Fig. 1 ersichtlich ist, sind eine Vielzahl von Spannhülsen 14 in dem Halterblock 12 aufgenommen. Für jede ist eine Ausnehmung 16 vorgesehen, und die Spannhülsen 14 und die Ausnehmungen 16 sind zueinander gleichartig.

Im Betrieb sind die Spannhülsen 14 beliebig mit Werkzeugen 18 bestückbar. Von den in Fig. 1 dargestellten Werkzeugen 18 ist je ein Schaft 20 zu sehen, und von dem separat dargestellten Werkzeug 18a zudem auch der Arbeitsbereich 22. Dieser ist der Einfachheit halber als Zylinder dargestellt, wobei es sich versteht, dass in der Praxis der Arbeitsbereich 22 nach der Art eines Fräsers, eines Bohrers, eines Drehschleifwerkzeugs oder in beliebiger anderer Weise ausgestaltet sein kann, und auch in einer beliebigen Form und in beliebigen Abmessungen.

Die Werkzeugmaschine weist einen Werkzeugarm auf, der in an sich bekannter Weise mit einem Spannfutter versehen ist. Das Spannfutter kann für den Werkzeugwechsel den Schaft 20 des gewünschten Werkzeugs 18 greifen und aus der zugehörigen Spannhülse 14 herausziehen.

Wenn das Werkzeug 18 nicht mehr benötigt wird, kann es an die gleiche Stelle, also in die dann leere Spannhülse 14, eingebracht werden, und das Spannfutter kann gelöst werden, nachdem das Werkzeug 18 dort abgelegt ist.

Der Halterblock 12 ist zusammen mit den Spannhülsen 14 und Werkzeugen 18 beweglich gelagert, über einen Haltezapfen 24. Damit unterliegen die Werkzeuge 18 und der Halterblock 12 entsprechenden Beschleunigungen, je nach Bewegung des Halterblocks 12. Es ist daher wichtig, dass die Werkzeuge 18 radial fest in den Spannhülsen 14 gelagert sind, und dieser wiederum fest in den Ausnehmungen 16.

Hierzu ist eine federnde Lagerung vorgesehen, die aus Fig. 1 lediglich schematisch ersichtlich ist. Immerhin ist in der rechts dargestellten Explosionszeichnung eine Druckfeder 26 ersichtlich. Diese umgibt einen bestimmten Bereich der Spannhülse 14 und ermöglicht eine axial federnde Lagerung der Spannhülse 14 in dem Halterblock 12.

Das Werkzeug 18 weist einen Haltering 28 auf. An diesem ist es in der Spannhülse 14 eingespannt gehalten. Der Haltering 28 trennt zudem den Schaft 20 von dem Arbeitsbereich 22 des Werkzeugs 18.

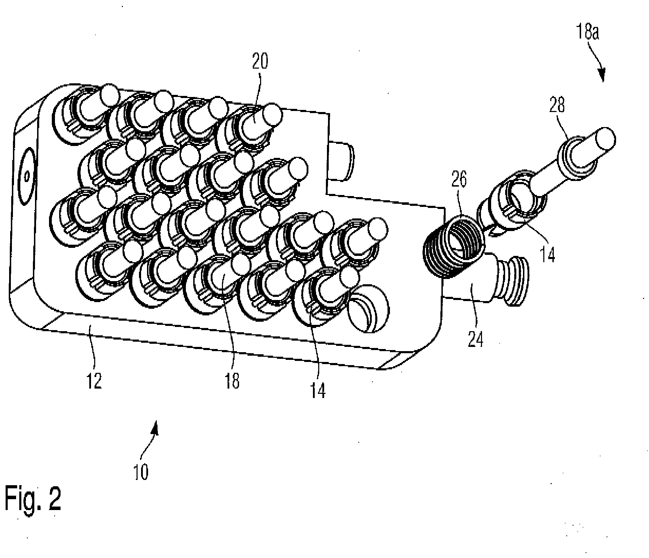

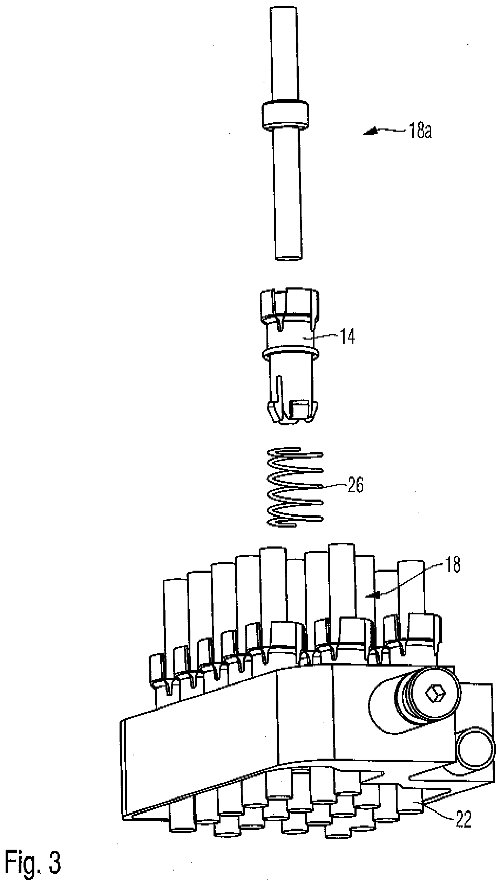

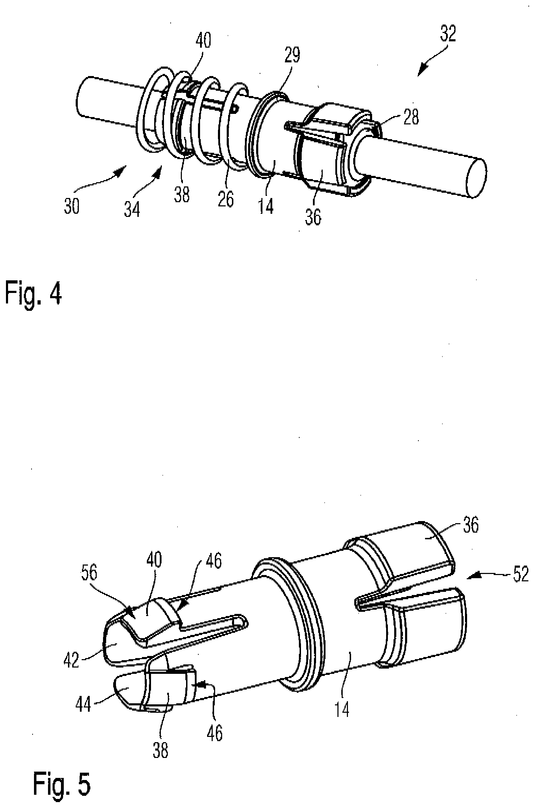

Aus den Fig. 2 und 3 sind weitere perspektivische Ansichten des Halterblocks 12 mit eingesetzten Spannhülsen 14 und Werkzeugen 18 ersichtlich. Aus Fig. 3 ist die Spannhülse 14 in etwas größerer Darstellung ersichtlich. Noch deutlicher ist jedoch insofern Fig. 4, und auch die Fig. 5, 6 und 7. Gleiche Bezugszeichen weisen hier wie in den weiteren Figuren auf gleiche Teile hin.

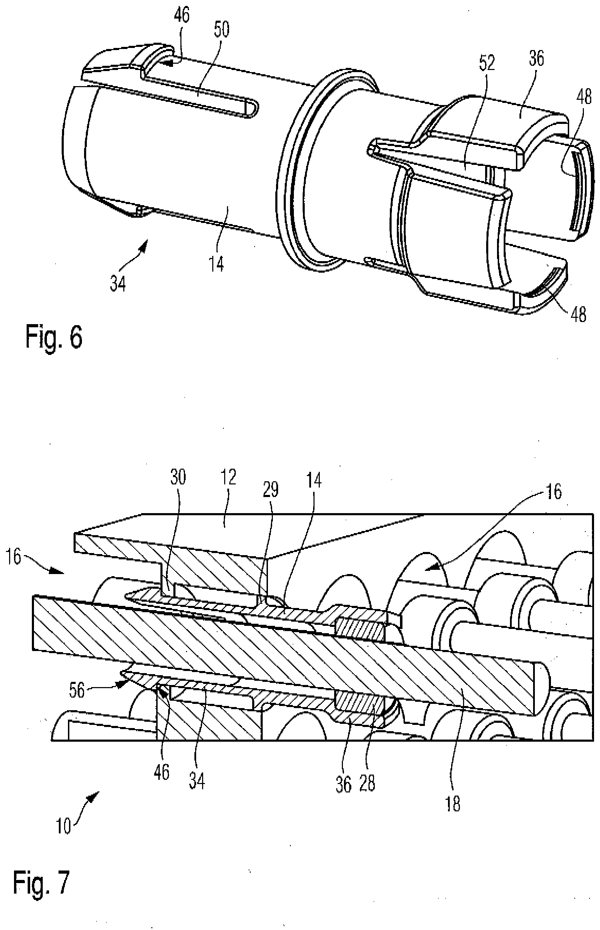

Die Spannhülse 14 weist einen Anschlagring 29 auf. Dieser dient als Anschlag für die Druckfeder 26 an deren einer Seite und erstreckt sich in der Ausnehmung 16. Die Druckfeder 26 ist auf ihrer anderen Seite an einem in Fig. 7 dargestellten Gegenstützelement 30 abgestützt. Sie erstreckt sich radial außerhalb der Spannhülse 14 an dieser Stelle. Am hinteren Ende 30 weist die Spannhülse 14 ein Spreizelement 34 auf, und am vorderen Ende 32 ein Spannelement 36.

Das Spreizelement 34 besteht in dem dargestellten Ausführungsbeispiel aus 4 Spreizzungen, von denen die Spreizzungen 38 und 40 aus Fig. 4 ersichtlich sind, und aus Fig. 5 auch die beiden weiteren Spreizzungen 42 und 44.

Jede Spreizzunge 38, 40, 42 und 44, oder gemäß Fig. 6 lediglich 2 Spreizzungen, die einander gegenüberliegenden, weist eine Anschlagschulter 46 auf. Diese ist dafür bestimmt, an dem Gegenstützelement 30 der Ausnehmung 16 anzuliegen. Hierzu wird die Druckfeder 26 durch Einschieben der Spannhülse 14 in die Ausnehmung 16 zusammengedrückt, und zwar so weit, bis die Anschlagschulter 46 an dem Gegenstützelement 30 nach außen schnappt und dort einrastet. In dieser Position ist die Spannhülse 14, wie es aus Fig. 3 ersichtlich ist, in der Ausnehmung 16 axial nachgiebig gehalten.

Die axiale Elastizität ist beim Bestücken mit dem Werkzeug 18 wichtig, denn auch ein zu tiefen Eindringen der Werkzeugarms mit dem Werkzeug 18 führt dann nicht zur Zerstörung der Spannhülse 14. Daher ist es erfindungsgemäß möglich, auch preisgünstiges PPA für die Spannhülse 14 zu verwenden.

Das Spannelement 36 ist dafür bestimmt, das Werkzeug 18 an dem Haltering 28 zu halten. Hierzu sind endseitig des Spannelements 36 Vorsprünge 48 vorgesehen, die radial einwärts weisen und den Haltering 28 per Reibschluss halten.

Der Durchmesser des Halterings 28 ist größer als derjenige des Werkzeugs 18 im Übrigen. Dementsprechend ist das Spannelement 36 endseitig innen mit einem etwas vergrößertem Durchmesser versehen, wie es aus Fig. 6 ersichtlich ist.

Das Spreizelement 34 weist zwischen den Spreizzungen 38 bis 44 Schlitze 50 auf, die aus den Fig. 4 bis 6 ersichtlich sind.

Ebenso sind Schlitze 52 an dem Spannelement 36 vorgesehen; sämtliche Schlitze erstrecken sind achsparallel der Spannhülse 14, wobei bevorzugt die Schlitze 52 sich zum vorderen Ende hin etwas verbreitern.

Aus Fig. 7 ist das erfindungsgemäße Spannelement 10 in montiertem Zustand ersichtlich. Die Druckfeder 26 ist in der Darstellung der Übersicht halber weggelassen. Das Werkzeug 18 erstreckt sich mit seinem Arbeitsbereich 22 durch die Spannhülse 14 hindurch, und in dem dargestellten Ausführungsbeispiel auch sogar durch den Halterblock 12 mit der Ausnehmung 16 hindurch. Es versteht sich, dass die Länge des Arbeitsbereiches 22 von Werkzeug zu Werkzeug unterschiedlich ist.

Das Spannelement 36 weist innen einen Absatz 54 auf. Dieser dient als axialer Anschlag für den Haltering 28 in der Spannhülse 14. Der Haltering 28 weist beidseitig einen Radius auf; dieser kann auch als Fase ausgebildet sein und dient der Erleichterung der Einführung des Haltering 28 in das Spannelement 36.

In an sich bekannter Weise haben auch die Spreizzungen 38 bis 44 Einführschrägen 56, die die Einführung in die Ausnehmung 16 und insbesondere auch in den Bereich des Gegenhalteelements 30 erleichtern.

## Patentansprüche

1. Einspannvorrichtung für ein Werkzeug an einer Werkzeugmaschine, mit einem Halterblock, mit mindestens 2, inbesondere einer Vielzahl von, Ausnehmungen für die Aufnahme von Spannhülsen, wobei mindestens 2 Spannhülsen in den Ausnehmungen aufgenommen sind, **dadurch gekennzeichnet, dass** jede Spannhülse (14) ein Spannelement (36) aufweist, mit welchem ein Werkzeug (18), insbesondere ein Schaft (20) eines Werkzeugs (18), einspannbar ist, und dass die Spannhülse (14) je die Ausnehmung (16) in dem Halterblock (12) mindestens teilweise durchtritt und an ihrem dem Spannelement (36) gegenüberliegenden Ende, dem hinteren Ende, ein Spreizelement (34) aufweist, das den Halterblock oder ein Gegenstützelement (30) des Halterblocks (12) hintergreift, insbesondere federbelastet hintergreift.

2. Einspannvorrichtung nach Anspruch 1, **dadurch gekennzeichnet, dass** eine Druckfeder (26) sich zwischen der Spannhülse (14) und dem Gegenstützelement (30) der Ausnehmung (16) erstreckt, die eine Anlageschulter (46) des Spreizelements (34) gegen das Gegenstützelement (30) des Halterblocks (12) drückt.

3. Einspannvorrichtung nach einen der vorhergehenden Ansprüche, **dadurch gekennzeichnet, dass** das Spreizelement (34) radial einwärts beweglich ist und im entspannten Zustand einen größeren Durchmesser als die Ausnehmung (16) aufweist.

4. Einspannvorrichtung nach einem der vorhergehenden Ansprüche, **dadurch gekennzeichnet, dass** das Spreizelement (34) der Spannhülse (14) beim Einführen in die Ausnehmung (16) und/oder in das Gegenstützelement (30) zusammendrückbar ist.

5. Einspannvorrichtung nach einem der vorhergehenden Ansprüche, **dadurch gekennzeichnet, dass** das Spreizelement (34) Anlageschultern (46) aufweist, insbesondere an Spreizzungen (38 bis 44), die sich radial nach außen an dem Gegenstützelement (30) oder dem hinteren Ende der Ausnehmung (16) erstreckt.

6. Einspannvorrichtung nach Anspruch 5, **dadurch gekennzeichnet, dass** jede Anlageschulter (46) radial oder ggf. schräg verläuft, insbesondere in einem Winkel zwischen 70 und 90° zu einer Achse der Spannhülse (14), bevorzugt in einem Winkel zwischen 80 und 88° und insbesondere in einem Winkel um 85°.

7. Einspannvorrichtung nach einem der vorhergehenden Ansprüche, **dadurch gekennzeichnet, dass** das Spreizelement (34) Einführschrägen (56) aufweist, deren Durchmesser am Beginn der Einführschräge (56), also am hinteren Ende des Spreizelements (34), geringer als der Durchmesser der Ausnehmung (16) ist und deren Durchmesser am Ende der Einführschräge (56) größer als der Innendurchmesser des Gegenstützelements (30) ist, wobei hier Durchmesser der Durchmesser außerhalb des Gegenstützelements (30) bedeutet.

8. Einspannvorrichtung nach einem der vorhergehenden Ansprüche, **dadurch gekennzeichnet, dass** das Spreizelement (34) Schlitze (50,52) aufweist, die sich zwischen Spreizzungen (38 bis 44) erstrecken, und dass eine Mehrzahl von Spreizzungen (38 bis 44), insbesondere 2 bis 8 Spreizzungen, um den Umfang des Spreizelements (34) verteilt angeordnet sind.

9. Einspannvorrichtung nach einem der vorhergehenden Ansprüche, **dadurch gekennzeichnet, dass** die Spannhülse (14) einen Anschlagring (29) aufweist, der einen Außendurchmesser hat, der bei Anlage an dem Halterblock (12) und aufgespreiztem Spreizelement (34) die Spannhülse (14) in dem Halteblock (12) fixiert.

10. Einspannvorrichtung nach einem der vorhergehenden Ansprüche, **dadurch gekennzeichnet, dass** das Spannelement (36) durch eine Mehrzahl von radial einwärts wirkenden Spannzungen (38 bis 44) gebildet ist, mit welchen ein Werkzeug (18) einspannbar ist.

11. Einspannvorrichtung nach einem der vorhergehenden Ansprüche, **dadurch gekennzeichnet, dass** endseitig eines Spannelements (36) ein sich tangential erstreckender radial einwärts weisender Vorsprung (48) ausgebildet ist, über welchen insbesondere Druck auf den Schaft des Werkzeugs (18) ausübbar ist.

12. Einspannvorrichtung nach einem der vorhergehenden Ansprüche, **dadurch gekennzeichnet, dass** der Halterblock (12) aus Metall und die Spannhülsen (14) aus Kunststoff bestehen, bevorzugt aus faserverstärktem PPA, insbesondere aus Grivory GVX-7H.

13. Werkzeugmaschine, mit einer Einspannvorrichtung für ein Werkzeug an einer Werkzeugmaschine, mit einem Halterblock, mit mindestens 2, inbesondere einer Vielzahl von, Ausnehmungen für die Aufnahme von Spannhülsen, wobei mindestens 2 Spannhülsen in den Ausnehmungen aufgenommen sind, **dadurch gekennzeichnet, dass** jede Spannhülse (14) ein Spannelement (36) aufweist, mit welchem ein Werkzeug (18), insbesondere ein Schaft (20) eines Werkzeugs (18), einspannbar ist, und dass die Spannhülse (14) je ein Gegenstützelement (30) des Halterblocks (12) oder die Ausnehmung (16) in dem Halterblock (12) durchtritt und an ihrem dem Spannelement (36) gegenüberliegenden Ende ein Spreizelement (34) aufweis, das ein Gegenstützelment (30) des Halterblock (12)s hintergreift.

14. Spannhülse für die Aufnahme in einer Einspannvorrichtung gemäß Anspruch 1.
